**Europäisches Patentamt**

**European Patent Office**

**Office européen des brevets**

(19)

(11) Veröffentlichungsnummer: **0 110 240 B1**

## (12) EUROPÄISCHE PATENTSCHRIFT

(45) Veröffentlichungstag der Patentschrift:
13.05.87

(21) Anmeldenummer: 83111467.3

(22) Anmeldetag: 17.11.83

(51) Int. Cl.⁴: **C 02 F 1/28, C 02 F 1/62**

(54) Verfahren und Vorrichtung zum Entfernen von im Abwasser vorhandenen Schwermetallen.

(30) Priorität: 01.12.82 DE 3244483

(43) Veröffentlichungstag der Anmeldung:
13.06.84 Patentblatt 84/24

(45) Bekanntmachung des Hinweises auf die Patenterteilung:
13.05.87 Patentblatt 87/20

(84) Benannte Vertragsstaaten:
AT BE CH DE FR GB IT LI NL SE

(56) Entgegenhaltungen:
DE - A - 2 263 047
DE - A - 2 414 521
DE - C - 666 060
US - A - 2 366 898
US - A - 3 129 066

CHEMICAL ABSTRACTS, Band 93, Nr. 22, 1. Dezember 1980, Seite 331, Nr. 209735h, Columbus, Ohio, USA C. VERSINO et al.: "Adsorption of heavy metals on primary and secondary sludges"
CHEMICAL ABSTRACTS, Band 95, Nr. 6, 10. August 1981, Seite 355, Nr. 48699y, Columbus, Ohio, USA
ABWASSERTECHNOLOGIE SPRINGER VERLAG BERLIN (1984) Seiten 532-534,610,611 und 864
ANAEROBE ABWASSER- UND SCHLAMMBEHANDLUNG-BIOGASTECHNOLOGIE,

(73) Patentinhaber: **Linde Aktiengesellschaft,**
Abraham-Lincoln-Strasse 21, D-6200 Wiesbaden (DE)

(72) Erfinder: **Morper, Manfred, Dr. rer.nat.,**
Zugspitzstrasse 13, D-8035 Gauting (DE)
Erfinder: **Frydman, Allen, Wilhelm-Busch-Strasse 18,**
D-8000 München 71 (DE)

(74) Vertreter: **Schaefer, Gerhard, Dr., Linde**
Aktiengesellschaft Zentrale Patentabteilung,
D-8023 Höllriegelskreuth (DE)

(56) Entgegenhaltungen: (Fortsetzung)
SEITE 43 TABELLE III (1983), OLDENBOURG VERLAG MÜNCHEN

## Beschreibung

Die Erfindung betrifft ein Verfahren zum Entfernen von in Abwasser vorhandenen Schwermetallen.

Schwermetalle finden sich in Abwässern verschiedener Art. Besonders hohe Konzentrationen von Schwermetallen finden sich in Industrieabwässern.

Es ist bekannt, Schwermetalle aus Abwässern der metallverarbeitenden Industrie durch Fällungsverfahren, durch Elektrolyse, durch Ionenaustausch usw. bis auf geringe Restkonzentrationen abzutrennen.

Schwermetalle finden sich jedoch beispielsweise auch in Destillationsschlempen der Weinbranderzeugung und in Abwässern der Zellstoffindustrie. In diesen beiden Fällen sind die Abwässer nicht nur anorganisch, sondern in hohem Masse organisch belastet, was dazu führt, dass die oben erwähnten chemischen Reinigungsverfahren versagen.

Die gleiche Situation kann sich ergeben, wenn schwermetallbelastete Industrieabwässer mit organisch belasteten Kommunalabwässern zusammen einer Abwasserkläranlage zugeleitet und aufbereitet werden. Auch hier macht sich störend bemerkbar, dass es praktisch keine Verfahren gibt, die es gestatten, die Schwermetalle aus diesen organisch hochbelasteten Abwässern zu beseitigen.

Die Schwermetalle machen sich in derartigen Abwässern insofern störend bemerkbar, als sie sich im Belebtschlamm und später im Faulschlamm anreichern. Überschreitet die Schwermetallkonzentration im Faulschlamm oder aerob stabilisiertem Schlamm bestimmte, durch Verordnungen, Gesetze etc. festgelegte Höchstwerte, dann kann der Schlamm nicht mehr an die Landwirtschaft zu Düngezwecken abgegeben werden, sondern muss anderweitig z.B. in Sonderdeponien gelagert werden, was bedeutend höhere Kosten verursacht als die Abgabe an die Landwirtschaft.

In der DE-C 660 060 ist die Anwendung eines Faulschlammes als adsorbierender Filter zur Abwasserreinigung beschrieben. Ein Klärbecken nach Art von Emscher-Brunnen wird zunächst als Faulbrunnen betrieben. Nach Entstehen einer passenden Faulschlammschicht erfolgt eine Umschaltung auf Filterbetrieb. Nach Verbrauch der Filterschicht wird diese abgeführt und das Klärbecken wieder als Faulbrunnen betrieben. Dieses bekannte Verfahren betrifft also ein rein anaerobes Abwasserreinigungsverfahren.

Dagegen ist kein Verfahren bekannt, das bei einer aeroben Abwasserreinigungsanlage zur Behandlung organisch hoch belasteter Abwässer eine Entfernung von Schwermetallen ermöglicht.

Es ist deshalb die Aufgabe der Erfindung, ein Verfahren anzugeben, das es gestattet, Schwermetalle aus Abwässern zu entfernen, insbesondere bevor diese einer biologischen Abwasserkläranlage zugeführt werden.

Diese Aufgabe wird erfindungsgemäss dadurch gelöst, dass das Abwasser mit anaerobem Schlamm umgesetzt wird, dass der anaerobe Schlamm aus Überschussschlamm einer aeroben biologischen Kläranlage erzeugt wird, und der anerobe Schlamm mit den aufgenommenen Schwermetallen vom Abwasser abgetrennt wird.

Beim erfindungsgemässen Verfahren wird erstmalig bewusst die Fähigkeit des anaeroben Schlamms ausgenutzt, Schwermetalle, z.B. Kupfer, aus Abwasser anzureichern. Da das Anreicherungsvermögen des anaeroben Schlamms sehr gross ist, genügt es, das Abwasser vor dem Eintritt in die Kläranlage mit einer relativ kleinen Menge anaeroben Schlamms in einem Reaktor umzusetzen, um eine fast völlige Freiheit des Abwassers von Schwermetallen zu erreichen.

Auf diese Weise gelingt es, den in Kläranlagen anfallenden Faulschlamm oder aerob stabilisierten Schlamm zum überwiegenden Teil schwermetallfrei zu halten, was seine Verwertung in der Landwirtschaft ermöglicht. Die relativ kleine, die Schwermetalle enthaltende Menge anaeroben Schlamms wird auf eine Sondermülldeponie verbracht oder kann, wenn die Schwermetallkonzentration dies lohnend erscheinen lässt, zur Metallrückgewinnung aufgearbeitet werden.

Erfindungsgemäss wird zur Umsetzung mit dem schwermetallbefrachteten Abwasser Überschussschlamm aus einer aeroben biologischen Kläranlage eingesetzt. Dieser Überschussschlamm ist zunächst zwar aerober Belebtschlamm, vermag jedoch in kurzer Zeit bei Unterbrechung der Sauerstoffzufuhr in den anaeroben Zustand überzugehen. Es genügt daher, den Reaktor, in dem die Abscheidung der Schwermetalle bewerkstelligt werden soll, doppelt auszuführen, so dass die Möglichkeit besteht, den einen der beiden Reaktoren zur Umsetzung zwischen anaerobem Schlamm und Abwasser einzusetzen, während in dem anderen Reaktor Belebtschlamm in den anaeroben Zustand übergeführt wird, so dass bei Erschöpfung des anaeroben Schlamms im ersten Reaktor der zweite sofort in den Abwasserstrom geschaltet werden kann.

Das erfindungsgemässe Verfahren, bei dem das Abwasser z.B. zuerst mit anaerobem Schlamm behandelt wird und danach einer aeroben Behandlung unterzogen wird, verfügt über die Vorteile, dass die aerobe Stufe weniger durch Schwermetallionen belastet wird und nur ein kleiner Teil des Überschussschlamms durch Schwermetallionen verseucht wird.

Die Schwermetalle bleiben im anaeroben Schlamm in Form von Komplexen, Hydroxiden, Sulfiden oder in anderer Form zurück. Wie Untersuchungen ergeben haben, ist die Retention der Schwermetalle im anaeroben Schlamm besser, wenn die Schwermetalle in Form von Sulfiden vorliegen. Gemäss einer weiteren Ausbildung des Erfindungsgedankens werden daher dem Abwasser biologisch abbaubare schwefelhaltige Chemikalien zugesetzt, um eine bessere Retention zu erreichen. Zweckmässigerweise erfolgt dieser Zusatz in Form von löslichen Sulfiden.

Gemäss einer weiteren Ausbildung des Erfindungsgedankens lässt sich im Abwasser enthaltendes Sulfat günstig zur Erhöhung der Retention des Schlamms für Schwermetalle ausnützen, indem die Umsatzzeit zwischen dem Schlamm und dem Abwasser erhöht wird. Es hat sich nämlich gezeigt, dass ein gewisser Abbau der organischen Fracht durch anaeroben Stoffwechsel zur Reduktion von höherwertigen Schwefelverbindungen zu Sulfiden beiträgt, so dass in den Fällen ausreichender Sulfatkonzentration im Abwasser ein Zusatz von biologisch abbaubaren schwefelhaltigen Chemikalien unter Umständen gänzlich unterbleiben kann.

Das erfindungsgemässe Verfahren lässt sich gleichermassen als separates Entmetallisierungsverfahren für Indirekteinleiter mit Schwermetallgrenzwerten, als integriertes Verfahren für industrielle Direkteinleiter mit eigener biologischer Kläranlage und als Vorstufe für bestehende kommunale und industrielle Kläranlagen einsetzen.

Die Umsetzung zwischen dem schwermetallhaltigen Abwasser und dem anaeroben Schlamm kann in einem z.B. aus der US-A-3 129 066 bekannten Reaktor durchgeführt werden, der sich äusserlich dadurch auszeichnet, dass auf die zylinderförmige Mischzone eine trichterförmige Sedimentationszone aufgesetzt ist. Die Einleitung des schwermetallhaltigen Abwassers und des Schlamms erfolgt in der Nähe des Bodens des mit einem Rührwerk ausgestatteten Reaktors. Durch das Rührwerk wird eine walzenförmige Strömung erzeugt, die zu einer guten Durchmischung des Schlamms mit dem Abwasser führt. In dem oberen, sich konisch erweiternden Sedimentationsteil des Reaktors verlangsamt sich dann die Geschwindigkeit des Auftriebs des suspendierten Schlamms durch den sich vergrössernden Querschnitt des Reaktors, so dass sich im oberen Teil des Sedimentationstrichters bald eine Zone ausbildet, die frei von Schlamm ist und von der das von Schwermetallen befreite Abwasser abgezogen werden kann. Der Abzug des mit Schwermetallen beladenen Schlamms erfolgt vom unteren Teil des Sedimentationsbeckens.

Diese Konstruktion hat sich als ausserordentlich preiswert und effektiv erwiesen.

Es können zur Durchführung des erfindungsgemässen Verfahrens auch andere bekannte Einrichtungen, wie z.B. Rundbecken-Schlammkontaktreaktoren, verwendet werden, bei denen das Abwasser in einen zylindrischen, zentral angeordneten Mischteil mit Rührwerk eingeleitet wird, dem auch der Schlamm zugeführt wird. Bei den bekannten Schlammkontaktreaktoren ist konzentrisch um die Mischzone eine Klärzone angeordnet. Der sedimentierte Schlamm wird mit Räumvorrichtungen von der Sohle entfernt und zum Teil in die Mischzone zurückgeführt.

Auch die bekannten separaten Misch- und Sedimentationsbecken können für das Verfahren der Erfindung Verwendung finden. Auf sie hier näher einzugehen, erübrigt sich, da sie dem Fachmann bekannt sind.

Die Erfindung sei weiterhin anhand eines schematisch dargestellten Ausführungsbeispiels noch näher erläutert. Es zeigt:

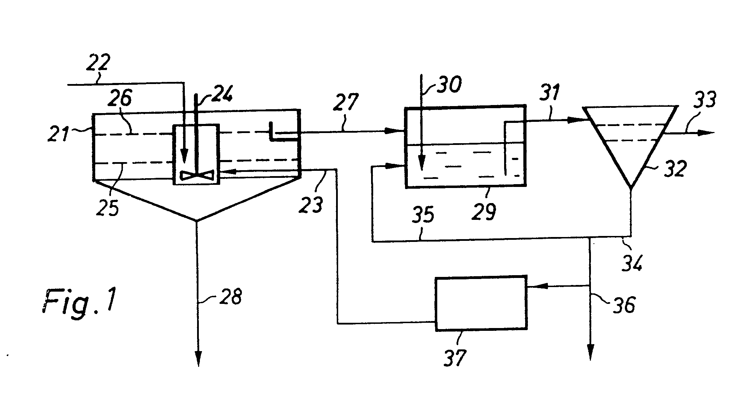

Figur 1 eine Anlage bei einem industriellen Direkteinleiter mit einer biologischen Kläranlage und einem vorgeschalteten konventionellen Schlammkontaktreaktor.

In Figur 1 ist eine Anlage dargestellt, wie sie z.B. für einen industriellen Direkteinleiter mit eigener biologischer Kläranlage benutzt werden könnte. Das schwermetallhaltige Abwasser wird einem Reaktor 21 durch Leitung 22 zugeführt. Durch Leitung 23 erhält der Reaktor anaeroben Schlamm. 24 ist ein Rührwerk. Mit 25 und 26 sind der Schlammspiegel und der Wasserspiegel bezeichnet. Durch Leitung 27 kann dem Reaktor Abwasser mit sehr niedrigem Schwermetallgehalt abgezogen werden, während der schwermetallhaltige Schlamm von Zeit zu Zeit durch Leitung 28 entfernt wird. Das schwermetallfreie Abwasser gelangt dann in ein Belebungsbecken 29, dem durch Leitung 30 gegebenenfalls ein sauerstoffhaltiges Gas oder auch reiner Sauerstoff zugeführt werden kann. Das Belebungsbecken 29 ist in bekannter Weise mit Umwälz- und Sauerstoffeintragvorrichtungen ausgestattet, die der Einfachheit halber nicht dargestellt wurden. Anschliessend gelangt das Belebtschlammgemisch durch Leitung 31 in ein Nachklärbecken 32, in dem sich der Belebtschlamm vom geklärten Wasser absetzt. Das geklärte Wasser verlässt die Anlage durch Leitung 33, während der Belebtschlamm durch Leitung 34 abfliesst. Ein Teil wird als Rückführschlamm wieder in das Belebungsbecken 29 zurückgeführt (Leitung 35), während ein anderer Teil als Überschussschlamm durch Leitung 36 abgelassen wird. Ein Teil dieses Überschussschlamms wird in ein Verweilbecken 37 überführt und dort etwa zwei Tage belassen. Dadurch, dass das Verweilbecken 37 gegenüber der Atmosphäre abgeschlossen ist, geht der Belebtschlamm in der angegebenen Zeit in anaeroben Schlamm über, der dann durch Leitung 23 zum Reaktor 21 geführt wird, um dort im Abwasser enthaltene Schwermetalle aufzunehmen.

Die in Figur 1 dargestellte Anlage eignet sich insbesondere zur Verarbeitung grosser Mengen Abwasser.

Der Anmeldungsgegenstand sei weiterhin anhand zweier Zahlenbeispiele für den industriellen Indirekteinleiter und für den industriellen Direkteinleiter veranschaulicht.

## Industrieller Indirekteinleiter

| | |
|---|---|
| Abwasseranfall | 100 m³/d in 10 h = 10 m³/h |
| Kupfergehalt | 7 mg/l; 700 g/d |
| Kupferelimination | 92%; 644 g/d |
| Kupferaufnahmefähigkeit des Schlams | 20 g/kg TS |
| Geforderte Reaktorstandzeit | 30 d; 19 320 g Cu zu eliminieren |
| Erforderliche Schlammenge | 966 kg TS/30 d |
| Erhältlicher Faulschlamm aus kommunalem Faulturm | 10% TS = 100 kg/m³ |
| Erforderliche Faulschlammenge | 9,7 m³ |
| Zulässige Oberflächenbeschickung in der Klärfläche | $Q_F = 0,8$ m/h |
| Erforderliche Klärfläche | 12,5 m²; d = 4 m |
| Volumen der Mischzone | 10 m³; h = 3 m; F = 3,2 m³; d = 2 m |
| Volumen der Sedimentationszone | 12,7 m³ |

## Industrieller Direkteinleiter

| | |
|---|---|
| Abwasseranfall | 1000 m³/d in 24 h = 41,7 m³/h |
| Zinkgehalt | 0,5 mg/l; 500 g/d |
| Zinkelimination | 90%; 450 g/d |
| Zinkaufnahmefähigkeit des Schlamms | 20 g/kg TS |
| Geforderte Reaktorstandzeit | 60 d; 27 000 g Zn zu eliminieren |
| Erforderliche Schlammenge | 1350 kg TS/60 d |
| Zur Verfügung stehender eingedickter Überschussschlamm aus biologischer Kläranlage | 7% = 70 kg/m³ |
| Erforderliche Schlammenge | 19,3 m³ |

### Patentansprüche

1. Verfahren zum Entfernen von in Abwasser vorhandenen Schwermetallen, dadurch gekennzeichnet, dass das Abwasser mit anaerobem Schlamm umgesetzt wird, dass der anaerobe Schlamm aus Überschussschlamm einer aeroben biologischen Kläranlage erzeugt wird und der anaerobe Schlamm mit den aufgenommenen Schwermetallen vom Abwasser abgetrennt wird.

2. Verfahren nach Anspruch 1, dadurch gekennzeichnet, dass dem anaeroben Schlamm biologisch abbaubare schwefelhaltige Chemikalien zugesetzt werden.

3. Verfahren nach Anspruch 2, dadurch gekennzeichnet, dass dem anaeroben Schlamm Sulfide zugesetzt werden.

4. Verfahren nach Anspruch 1, dadurch gekennzeichnet, dass die Umsatzzeit zwischen dem Abwasser und dem anaeroben Schlamm im Fall sulfathaltiger Abwässer verlängert wird.

### Claims

1. A method of removing heavy metals present in sewage, characterised in that the sewage is caused to react with anaerobic sludge; that the anaerobic sludge is produced from the surplus sludge from an aerobic biological sewage-treatment plant, and the anaerobic sludge with heavy metals it has taken up is separated from the sewage.

2. A method according to Claim 1, characterised in that bio-degradable sulphur-containing chemicals are added to the anaerobic sludge.

3. A method according to Claim 2, characterised in that sulphides are added to the anaerobic sludge.

4. A method according to Claim 1, characterised in that the time of reaction between the sewage and the anaerobic sludge is extended in the case of sewage containing sulphates.

### Revendications

1. Procédé pour l'élimination de métaux lourds présents dans des eaux résiduaires, caractérisé en ce que l'on fait réagir l'eau résiduaire avec une boue anaérobie, en ce que la boue anaérobic est obtenue à partir de la boue en excès d'une installation de clarification biologique aérobie et en ce que la boue anaérobic avec les métaux lourds collectés est séparée des eaux résiduaires.

2. Procédé selon la revendication 1, caractérisé en ce qu'on ajoute à la boue anaérobie des produits chimiques biologiquement dégradables contenant du soufre.

3. Procédé selon la revendication 2, caractérisé en ce que l'on ajoute à la boue anaérobie des sulfures.

4. Procédé selon la revendication 1, caractérisé en ce que le temps de mélange entre l'eau résiduaire et la boue anaérobie est prolongé dans le cas où les eaux résiduaires contiennent des sulfates.

Fig.1